# NEUE EUROPÄISCHE PATENTSCHRIFT

(11) **EP 1 623 918 B2**
(45) Veröffentlichungstag und Bekanntmachung des Hinweises auf die Entscheidung über den Einspruch: **14.02.2018**
(45) Hinweis auf die Patenterteilung: 21.05.2008
(21) Anmeldenummer: 05016841.8
(22) Anmeldetag: 03.08.2005
(51) Int. Cl.: B62M 25/04

(54) **Verstelleinrichtung für Triggerschalter**
Adjusting device for gear change
Dispositif de réglage pour changement de vitesse

(30) Priorität: 04.08.2004 DE 102004037741
(43) Veröffentlichungstag der Anmeldung: 08.02.2006
(60) Teilanmeldung: 08006812.5
(73) Patentinhaber: SRAM Deutschland GmbH, 97404 Schweinfurt (DE)
(72) Erfinder: McLaughlin, Scott, 97424 Schweinfurt (DE); Böhm, Robert, Dipl.-Ing., 97453 Mainberg (DE); Weiss, Martin, Dipl.-Ing., 97424 Schweinfurt (DE)
(74) Vertreter: Weickmann & Weickmann PartmbB

(56) Entgegenhaltungen:
- EP-A1- 0 509 457
- EP-A1- 0 698 548
- EP-A2- 0 939 026
- EP-A2- 1 270 396
- EP-A2- 1 378 437
- DE-A1- 3 405 421
- DE-A1- 3 405 421
- DE-A1- 10 224 196
- JP-A- 01 134 591
- JP-A- 02 031 993
- JP-A- 63 315 390
- JP-A- S63 312 291
- JP-A- 2002 025 974
- US-A- 4 046 025
- US-A- 4 974 469
- Shimano Sales Manual "Exage"
- Auszug aus Shimano "Complete Line of Shimano Bicycle System Components"
- Auszug aus "Shimano World" Vol. 8, No 4, 1989

## Beschreibung

Die Erfindung betrifft einen Schalter zur Betätigung eines Getriebes an einem Fahrrad, gemäß dem Oberbegriff der Ansprüche 1 und 6.

Aus der EP 1 270 396 A2 geht ein derartiger Triggerschalter zur Betätigung einer Schaltung hervor, der neben einem Bremshebel auf einem Lenker montiert ist, wobei die Bedienungshebel des Triggerschalters zu einem Griffteil am Lenker in einer allgemein günstigen ergonomischen Position stehen, aber hinsichtlich einer individuellen Einstellbarkeit unter Berücksichtigung der unterschiedlichen Größen der Hände der bedienenden Fahrer nicht ausreichend viele Verstellmöglichkeiten haben. Die Befestigung des Triggerschalters lässt lediglich seine Verschiebung in Längsrichtung und seine Verdrehung um die Mittelachse des Lenkers zu. Außerdem liegen die Positionen der drei Elemente, nämlich des Triggerschalters, des Bremshebels und des Griffteils von vornherein fest.

Aus der DE-A-34 05 421 ist ein Schalter bekannt mit zwei Schalthebeln, die an einem Lagerbock schwenkbar gelagert sind. Der Lagerbock ist mit einer am Fahrradrahmen anbringbaren Schelle fest verschraubt. Die beiden Schalthebel sind jeweils mit einem Schaltseil verbunden, um einen Umwerfer einer vorderen bzw. hinteren Kettenschaltung wahlweise umschalten zu können. Reibungsscheiben halten die Schalthebel in der jeweils gewünschten Schwenkstellung.

Ein aus derJP-A-63-315390 (1988) bekannter Schalter mit einem einzigen Schalthebel ist an einem Arm wahlweise in einer von drei möglichen Positionen befestigbar. Der Arm wiederum steht an der vom Griffteil des Lenkers abgewandten Seite eines Bremshebelträgers ab, welcher Träger am Lenker über eine Schelle, die Bremsbandage, befestigt ist. Auch der aus der JP-A-2-31993 (1990) bekannte Schalter mit lediglich einem Hebel ist am Bremshebelträger auf der griffabgewandten Seite befestigt und zwar über einen vom Schalter abstehenden Bolzen, der in eine Bohrung des Bremshebelträgers eingesteckt wird und der innerhalb der Bohrung mittels Madenschraube in wahlweiser Position fixiert werden kann.

Die JP-U-1-134591 (1989) schließlich zeigt einen Schalter mit nur einem Hebel mit einer Exzenterverbindung zwischen Hebelträger und Hebel mit zur Lenker-Längsrichtung senkrechter Exzenterachse, die eine dementsprechende Positionsverlagerung der Hebelschwenkachse längs des Exzenterkreises zulässt

Dem gegenüber wird ein Schalter mit dem Merkmalen des Anspruchs 1 vorgeschlagen, der eine Vielzahl von individuellen Einstellmöglichkeiten aufweist um möglichst den Wünschen aller Benutzer gerecht zu werden. Dieser Schalter ermöglicht es dem Fahrer des Fahrrades, die Betätigungsfläche mit einer Kontaktfläche am Freigabehebel abzustimmen, wobei zu berücksichtigen ist, dass dieser um eine Achse in einer Drehebene dreht, die um einen Winkel von etwa 60° zu der des Spannhebels geneigt ist und dass die Betätigungsfläche ebenso wie die Kontaktfläche mit dem Daumen zu bedienen sind. Die Betätigungsrichtung der Kontaktfläche weist ebenso wie die der Betätigungsfläche in Fahrtrichtung, weist aber gegenüber jener nach oben.

Die Befestigung des Spannhebels auf dem Mitnahmeteil geschieht bevorzugt über zwei Klemmarme, die das Mitnahmeteil umschließen und über eine Spannschraube, die die Klemmarme verbindet und gegeneinander verspannt.
Die Spannschraube weist bevorzugt einen Schaft auf, der in einer ringförmigen Aussparung des Mitnahmeteils links und rechts an zwei Flanken anliegt und so die axiale Position des Spannhebels auf dem Mitnahmeteil sichert. Nachdem die Betätigungsfläche durch Verdrehen des Spannhebels in die geeignete Lage relativ zur Kontaktfläche des Freigabehebels gebracht worden ist, wird die Schraube festgezogen.

Als zweite Maßnahme zur Erzielung einer individuellen Einstellbarkeit der Position des Spannhebels und des Freigabehebels relativ zu der Lage des Griffteils wird ein ein Schalter mit den Merkmalen des Anspruchs 6 vorgeschlagen. Die variable Befestigung einer Schelle am Schaltergehäuse bewirkt, dass die Schelle des Schaltergehäuses entweder direkt neben dem Griffteil am Lenker montiert werden kann, oder aber erst im Anschluss an eine Bremsbandage des Handbremshebels, wobei die Schelle am Schaltergehäuse in ihrer Position veränderbar ist.

Das Schaltergehäuse weist einen Sockel mit mindestens zwei Bohrungen auf, die voneinander einen Abstand aufweisen, der es erlaubt, das Schaltergehäuse gegenüber der Schelle parallel zum Lenker in mindestens einer Stufe zu versetzen. Der Sockel weist eine zum Griffteil des Lenkers parallele Längsführung auf, auf der die Schelle verschoben und an einer der Bohrungen mittels der Schraube auf der Längsführung befestigt werden kann.
Es folgt nun die Entscheidung, ob die Schelle auf dem Lenker zwischen dem Griffteil und einer Bremsbandage montiert werden soll oder auf der dem Griffteil abgewandten Seite der Bremsbandage, da möglicherweise der mit der Bremsbandage befestigte Bremsgriff aus ergonomischen Gründen nahe am Griffteil montiert werden muss. Ist letztere Konstellation der Fall, dann kann der durch die Breite der Bremsbandage verursachte Abstand der Schelle zu dem Griffteil dadurch verkleinert werden, dass die Schelle am Schaltergehäuse durch Eindrehen der Schraube in die vom Griffteil entfernter liegende Bohrung fixiert wird. Hierdurch nähern sich die Betätigungsfläche und die Kontaktfläche dem Griffteil an. Muss aber die Schelle auf dem Lenker zwischen dem Griffteil und der Bremsbandage montiert werden, so kann die Schelle am Schaltergehäuse über die dem Griffteil naheliegende Bohrung verbunden werden. Einerlei welche Entscheidung sich in dem jeweiligen Fall ergibt, es ist immer von einem auf dem Fahrrad sitzenden Fahrer zu prüfen, wie sich die gewählte Einstellung eignet. Immer ist nach Fertigstellung der Fahrradmontage eine Probefahrt durchzuführen, nach welcher Korrekturen am Schalter durch
- Lösen der Schraube und/oder der Spannschraube
- Verschieben der fraglichen Elemente
- Anziehen der Schraube
- Anziehen der Spannschraube
durchgeführt werden können.

Die Erfindung hat es sich also zur Aufgabe gemacht, einen Schalter am Lenker zum Schalten von Gangstufen in einem Fahrradgetriebe zu schaffen, der einen Spannhebel und einen Freigabehebel aufweist, die sich ungeachtet der konstruktiven Ausgestaltung des Lenkers mit einem Bremshebel und dessen Bremsbandage entsprechend den individuellen Anforderungen der Fahrer ergonomisch optimal bedienen lassen.

Die Lösung der Aufgabe ist in den kennzeichnenden Teilen des Hauptanspruches, sowie des nebengeordneten Anspruches 6 beschrieben. Ausgestaltungen sind den jeweiligen Unteransprüchen zu entnehmen.

Anhand von mehreren Zeichnungen wird ein Schalter mit einer individuellen Einstellbarkeit eines Spannhebels und eines Freigabehebels relativ zu einem Griffteil am Lenker des Fahrrades erläutert. Es zeigen:

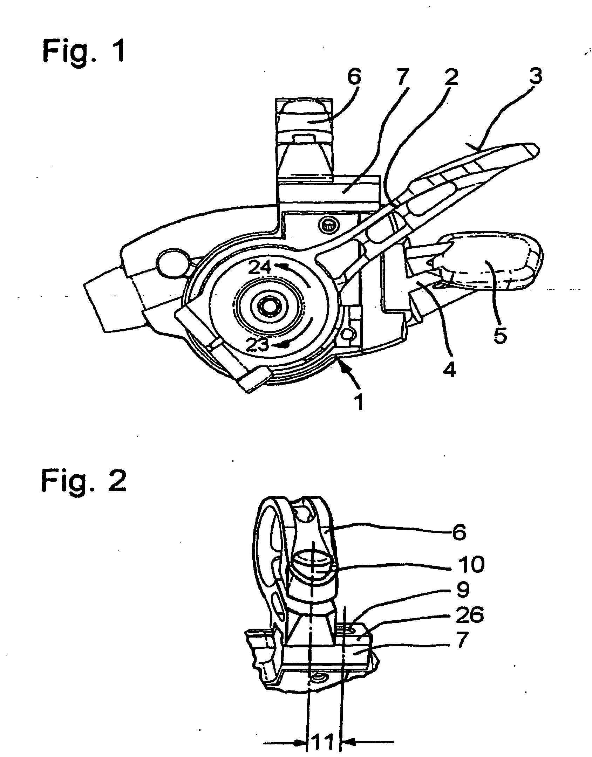

- Fig.1: einen Schalter mit einem Schaltergehäuse, einer Schelle, einem Spannhebel und einem Freigabehebel;
- Fig.2: die Anordnung der Schelle auf einem Sockel am Schaltergehäuse in einer Teilansicht;

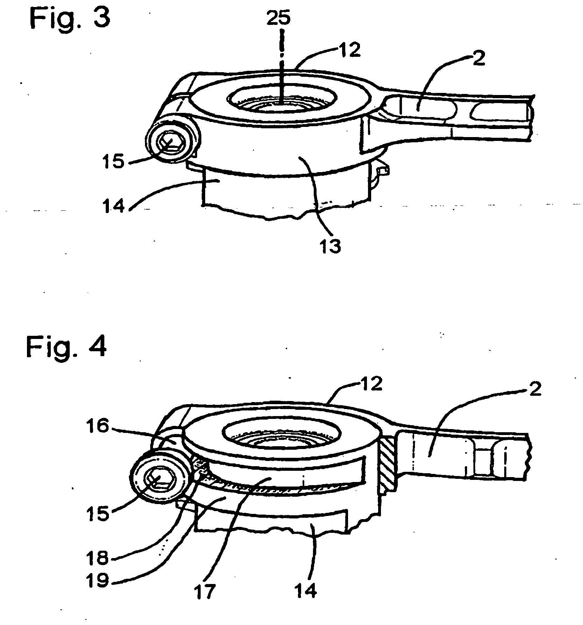

- Fig.3: den Spannhebel mit zwei Klemmarmen auf einem Mitnahmeteil in einer Teilansicht;
- Fig.4: das Mitnahmeteil mit einer Aussparung und Flanken zur Aufnahme eines Schaftes einer Spannschraube im Teilschnitt;

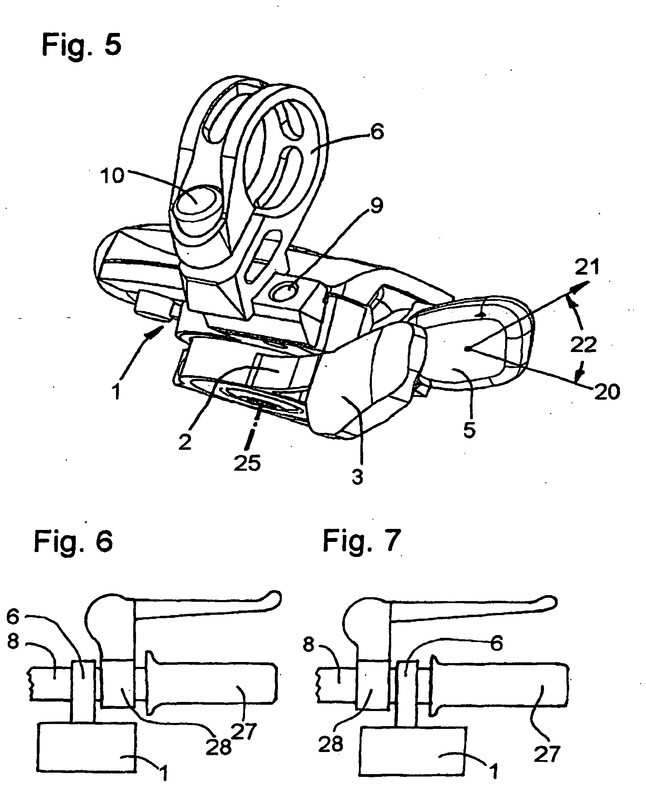

- Fig.5: die Anordnung der Schelle, des Spannhebels und des Freigabehebels am Schaltergehäuse mit der Angabe einer Betätigungsrichtung für den Freigabehebel in perspektivischer Ansicht;
- Fig.6: die Anordnung der Schelle mit dem Schaltergehäuse am Lenker zwischen einem Griffteil und einer Bremsbandage;
- Fig.7: die Anordnung der Schelle mit dem Schaltergehäuse am Lenker neben der Bremsbandage.

Wird mit 1 ein Schaltergehäuse bezeichnet, so ist dieses mittels einer Schelle 6 mit einem Lenker 8 verbunden und weist dieses ein mit einem Seilspeicher verbundenes Mitnahmeteil 14 auf, mit dem ein Spannhebel 2 mit einer Betätigungsfläche 3 verbunden ist. Der Spannhebel 2 weist einen ersten Klemmarm 12 und einen zweiten Klemmarm 13 auf, die sich um eine zylindrische Außenfläche 19 am Mitnahmeteil 14 legen lassen und miteinander durch eine Spannschraube 15 verbindbar sind. Die Spannschraube 15 weist einen Schaft 16 auf, der sich bei richtiger Montage des Spannhebels 2 in eine ringförmige Aussparung 17 mit zwei Flanken 18 an der Außenfläche 19 des Mitnahmeteils 14 anlegt, wobei ein Reibschluss zwischen dem Spannhebel 2 und dem Mitnahmeteil 14 hergestellt wird.

Der Spannhebel 2 wird in einer zu einer Drehachse 25 senkrecht stehenden Drehebene 20 betätigt, wickelt das Seil in einer Seilaufwickeldrehrichtung 23 auf den Seilspeicher auf und schaltet so stufenweise die einzelnen Gangstufen des Getriebes in einer ersten Schaltrichtung durch.

Das Schaltergehäuse 1 weist neben dem Spannhebel 2 einen Freigabehebel 4 auf, der mit dem Daumen an einer Kontaktfläche 5 bedient werden kann. Dieser Freigabehebel 4 dreht sich in einer Ebene, die zu der Drehebene 20 des Spannhebels 2 um einen Winkel 22 von 60° nach oben geneigt ist, so dass der bedienende Fahrer eigentlich eine zu der Bewegungsrichtung am Spannhebel 2 um 60° nach oben in Fahrtrichtung geneigte Bewegung in einer Betätigungsrichtung 21 machen müsste. Da der Freigabehebel 4 aber nur zur Freigabe des Seiles in einer Seilfreigabedrehrichtung 24 einen kleinen Anstoß braucht, geht die Daumenbewegung ins Leere, wenn die erste Berührung erfolgt ist. Der Daumen rutscht also von der Kontaktfläche 5 ab, wenn die Schaltung erfolgt ist. An diese Art, das Seil freizugeben und die Gangstufen entgegen der ersten Schaltrichtung zu schalten, gewöhnt sich ein Fahrer schnell und überlässt so dem Mechanismus das Schalten vollständig.

Zur vorbeschriebenen Ergonomie gehört auch die Verstellbarkeit der Schelle 6 gegenüber dem Schaltergehäuse 1, das gegenüber einem Griffteil 27 parallel zum Lenker 8 verschiebbar angeordnet sein muss, um das Schaltergehäuse 1 mit seinem Spannhebel 2 entweder direkt neben dem Griffteil 27 am Lenker 8 zu montieren, oder aber erst im Anschluss an eine Bremsbandage 28 eines Handbremshebels, wodurch die Betätigungsfläche 3 des Spannhebels 2 zum Griffteil 27 in eine günstige Position gebracht werden kann. Damit auch enge Abstufungen bei der Verschiebung des Schaltergehäuses 1 möglich sind, ist die Schelle 6 auf einem Sockel 7 am Schaltergehäuse 1 verschraubt, wobei der Sockel 7 eine Längsführung 26 und mindestens zwei Bohrungen 9 aufweist, in die eine Schraube 10 zur Befestigung der Schelle 6 eingedreht wird. Die beiden Bohrungen 9 weisen einen Abstand 11 voneinander auf, der es ermöglicht, die Schelle 6 wahlweise an der einen oder an der um diesen Abstand 11 versetzten anderen Bohrung 9 anzuordnen.

Der Vorteil des vorgeschlagenen Schalters liegt in der individuell an die Bedürfnisse den einzelnen Fahrers angepasste Einstellbarkeit des Schaltergehäuses 1 gegenüber dem Griffteil 27 am Lenker 8 durch unterschiedliche Anschlussstellen der Schelle 6 am Schaltergehäuse 1 sowie eine ergonomische Optimierung der Position der Betätigungsfläche 3 des Spannhebels 2 gegenüber der Kontaktfläche 5 des Freigabehebels 4 durch die frei wählbare Anordnung des Spannhebels 2 auf dem mit dem Seilspeicher verbundenen Mitnahmeteil 14 durch eine Klemmbefestigung. Schließlich wird noch ein Verfahren zur Einstellung des Schalters, der aus dem Schaltergehäuse 1 mit der Schelle 6, dem Spannhebel 2 mit der Betätigungsfläche 3 und dem Freigabehebel 4 mit der Kontaktfläche 5 besteht, vorgeschlagen, um die bestmögliche Ergonomie bei der Bedienung zu erzielen, wobei das Verfahren durch die folgenden Schritte gekennzeichnet ist:
* Eine Entscheidung wird getroffen, ob die Schelle 6 auf dem Lenker 8 zwischen dem Griffteil 27 und der Bremsbandage 29 montiert werden soll oder auf der dem Griffteil 27 abgewandten Seite der Bremsbandage 29 unter Berücksichtigung der optimalen Lage der Kontaktfläche 3 relativ zur Lage des Daumens des Fahrers während der Fahrt;
* Die Schelle 6 wird am Schaltergehäuse 1 durch Eindrehen der Schraube 10 in die aus der Entscheidung resultierende Bohrung 9 befestigt;
* Die Schelle 6 wird mit dem Schaltergehäuse 1 auf den Lenker 8 aufgeschoben;
* Die Bremsbandage 29 wird auf den Lenker 8 vor oder nach der Schelle 6 je nach dem Resultat aus der vorausgegangenen Entscheidung aufgeschoben;
* Der Griffteil 27 wird aufgeschoben;
* Der Spannhebel 2 wird auf dem Mitnahmeteil 14 mittels der Spannschraube 15 in den Klemmarmen 12 und 13 locker befestigt;
* Die Schraube 10 zur Fixierung des Schaltergehäuses 1 wird nach Prüfung durch den auf dem Fahrrad sitzenden Fahrer angezogen;
* Die Spannschraube 15 wird nach Prüfung der Position der Betätigungsfläche zu der Kontaktfläche 5 durch den Fahrer angezogen;
* Nach einer Probefahrt werden die Klemmverbindungen durch Lösen und wieder Anziehen der Schraube (10) und/oder der Spannschraube (15) korrigiert, falls erforderlich.

## Patentansprüche

1. Schalter zur Betätigung eines Getriebes an einem Fahrrad, umfassend ein Schaltergehäuse (1), einen Seilspeicher zum Aufwickeln eines Seiles zur Betätigung einzelner Gangstufen des Getriebes, einen Spannhebel (2), einen Freigabehebel (4), wobei der Spannhebel (2) am Schaltergehäuse (1) zur Schaltung einzelner Gangstufen im Getriebe in einer Seilaufwickeldrehrichtung um eine Drehachse (25) verdrehbar ist, während in einer Seilfreigabedrehrichtung durch die Betätigung des Freigabehebels (4) jeweils mindestens eine Gangstufe schaltbar ist,
**dadurch gekennzeichnet, dass** die Positionen des Spannhebels (2) und des Freigabehebels (4) untereinander und relativ zu einem Griffteil (27) am Lenker (8) des Fahrrades einstellbar sind, und
dass der Spannhebel (2) an einem mit dem Seilspeicher verbundenen Mitnahmeteil (14) innerhalb seiner zur Drehachse (25) senkrecht stehenden Drehebene (20) in beliebig vielen Positionen relativ zum Mitnahmeteil (14) anbringbar ist.

2. Schalter nach Anspruch 1,
**dadurch gekennzeichnet,**
**dass** der Spannhebel (2) mit einer Aussenfläche (19) am Mitnahmeteil (14) reibschlüssig verbunden ist.

3. Schalter nach Anspruch 1 oder 2,
**dadurch gekennzeichnet,**
**dass** der Spannhebel (2) einen ersten Klemmarm (12) und einen zweiten Klemmarm (13) aufweist, die durch eine Spannschraube (15) mit der Aussenfläche (19) am Mitnahmeteil (14) drehfest verbindbar sind.

4. Schalter nach Anspruch 3,
**dadurch gekennzeichnet,**
**dass** die Spannschraube (15) einen Schaft (16) aufweist, der zwischen zwei Flanken (18) einer Aussparung (17) des Mitnahmeteils (14) angeordnet ist.

5. Schalter nach einem der Ansprüche 1 bis 4,
**dadurch gekennzeichnet,**
**dass** der Spannhebel (2) in jeder Position innerhalb eines Winkels von mindestens 120 deg. arretierbar ist.

6. Schalter zur Betätigung eines Getriebes an einem Fahrrad, umfassend ein Schaltergehäuse (1), einen Seilspeicher zum Aufwickeln eines Seiles zur Betätigung einzelner Gangstufen des Getriebes, einen Spannhebel (2) und einen Freigabehebel (4), wobei der Spannhebel (2) am Schaltergehäuse (1) zur Schaltung einzelner Gangstufen im Getriebe in einer Seilaufwickeldrehrichtung verdrehbar ist, während in einer Seilfreigabedrehrichtung durch die Betätigung des Freigabehebels (4) jeweils mindestens eine Gangstufe schaltbar ist, wobei das Schaltergehäuse (1) mit einer an einem Lenker (8) anbringbaren Schelle (6) versehen ist,
**dadurch gekennzeichnet,**
**dass** die Schelle (6) zum Schaltergehäuse (1) gesondert ausgebildet ist und gegenüber dem Schaltergehäuse (1) parallel zum Lenker (8) zwischen unterschiedlichen Anbringpositionen am Schaltergehäuse (1) verschiebbar ausgebildet ist, dass das Schaltergehäuse (1) einen Sockel (7) mit mindestens zwei Bohrungen (9) aufweist, wobei die Bohrungen (9) von einander einen Abstand (11) aufweisen, und dass der Sockel (7) eine zum Griffteil (27) des Lenkers (8) parallele Längsführung (26) aufweist, auf der die Schelle (6) verschoben und an einer der Bohrungen (9) mittels einer Schraube (10) auf der Längsführung (26) befestigt werden kann.

7. Schalter nach einem der Ansprüche 1 oder 6,
**dadurch gekennzeichnet,**
**dass** die Ebene der Betätigung einer Kontaktfläche (5) des Freigabehebels (4) etwa 60° zu der Betätigungsebene des Spannhebels (2) mit seiner Betätigungsfläche (3) geneigt ist.

8. Schalter nach Anspruch 7,
**dadurch gekennzeichnet,**
**dass** die Position der jeweils vom Daumen der am Griffteil (27) des Lenkers (8) befindlichen Hand wechselweise betätigbaren Betätigungsfläche (3) und Kontaktfläche (5) zueinander durch die Einstellung des Spannhebels (2) auf dem Mitnahmeteil (14) optimierbar ist.

9. Verfahren zur Einstellung eines Schalters, bestehend aus einem Schaltergehäuse nach einem der Ansprüche 3 bis 5 und einem der Ansprüche 6 bis 8 mit einer Schelle (6), einem Spannhebel (2) mit einer Betätigungsfläche (3) und einem Freigabehebel (4) mit einer Kontaktfläche (5),
**gekennzeichnet durch** die folgenden Verfahrensschritte:
- Entscheidung, ob die Schelle (6) auf dem Lenker (8) zwischen dem Griffteil (27) und einer Bremsbandage (29) montiert werden soll oder auf der dem Griffteil (27) abgewandten Seite der Bremsbandage (29) unter Berücksichtigung der optimalen Lage der Kontaktfläche (3) relativ zur Lage des Daumens des Fahrers während der Fahrt;
- Befestigung der Schelle (6) am Schaltergehäuse (1) mittels der Schraube (10), die in die aus der Entscheidung resultierende Bohrung (9) eingedreht wird;
- Aufschieben der Schelle (6) mit dem Schaltergehäuse (1) auf den Lenker (8);
- Aufschieben der Bremsbandage (28) auf den Lenker (8) vor oder nach der Schelle (6) je nach der vorausgegangenen Entscheidung;
- Aufschieben des Griffteils (27);
- Aufschieben des Spannhebels (2) auf das Mitnahmeteil (14) und lockere Befestigung der Spannschraube (15) in den Klemmarmen (12) und (13);
- Anziehen der Schraube (10) zur Fixierung des Schaltergehäuses (1) nach Prüfung durch den auf dem Fahrrad sitzenden Fahrer;
- Anziehen der Spannschraube (15) nach Prüfung der Position der Betätigungsfläche (3) zu der der Kontaktfläche (5) durch den auf dem Fahrrad sitzenden Fahrer;
- Probefahrt und evtl. Korrektur der Klemmverbindungen durch Lösen und wieder Anziehen der Schraube (10) und/oder der Spannschraube (15).

## Claims

1. A shifter for operating a gear changing device on a bicycle, comprising a shifter housing (1), a cable spool for winding a cable for operating the individual gears of the gear changing device, a tensioning lever (2), a releasing lever (4), wherein the tensioning lever (2) on the shifter housing (1) is rotatable about a rotary axis (25) for shifting individual gears in the gear changing device in a cable winding direction, whereas at least one gear change can be made in a cable releasing rotary direction by operating the releasing lever (4),
**characterised in that** the positions of the tensioning lever (2) and the releasing lever (4) are adjustable in relation to each other and in relation to a gripping part (27) on the handlebar (8) of the bicycle, and
that the tensioning lever (2) can be attached to a driving element (14) connected to the cable spool within its rotational plane (20) which is perpendicular to the rotary axis (25) in any number of positions relative to the driving element (14).

2. The shifter according to claim 1,
**characterised in that** the tensioning lever (2) is connected in a frictionally-engaged manner to an external surface (19) on the driving element (14).

3. The shifter according to claim 1 or 2,
**characterised in that** the tensioning lever (2) comprises a first clamping arm (12) and a second clamping arm (13), which can be connected in a rotation-fast manner by a locking screw (15) with the external surface (19) on the driving element (14).

4. The shifter according to claim 3,
**characterised in that** the locking screw (15) has a shaft (16) which is arranged between two sides (18) of a recess (17) of the driving element (14).

5. The shifter according to one of claims 1 to 4,
**characterised in that** the tensioning lever (2) can be locked in each position within an angle of at least 120 degrees.

6. The shifter for operating a gear changing device on a bicycle, comprising a shifter housing (1), a cable spool for winding a cable for operating the individual gears of the gear changing device, a tensioning lever (2) and a releasing lever (4), wherein the tensioning lever (2) on the shifter housing (1) is rotatable for shifting individual gears in the gear changing device in a cable winding direction, whereas at least one gear change can be made in a cable releasing rotary direction by operating the releasing lever (4), wherein the shifter housing (1) is provided with a clamp (6) attachable to a handlebar (8),
**characterised in that** the clamp (6) is designed separately from the shifter housing (1) and is designed to be displaceable relative to the shifter housing (1) parallel to the handlebar (8) between different attachment positions on the shifter housing (1),
that the shifter housing (1) comprises a base (7) with at least two bores (9), wherein the bores (9) are spaced apart (11) from one another and that the base (7) has a longitudinal guide (26) which is parallel to the gripping part (27) of the handlebar (8), on which longitudinal guide the clamp (6) can be pushed and secured on one of the bores (9) by means of a screw (10) on the longitudinal guide (26).

7. The shifter according to one of claims 1 or 6,
**characterised in that** the plane for activating a contact surface (5) of the releasing lever (4) is inclined by about 60° to the activating plane of the tensioning lever (2) with its activating surface (3).

8. The shifter according to claim 7,
**characterised in that** the position of the activating surface (3) and contact surface (5) which can be activated alternately by the thumb of the hand located on the gripping part (27) of the handlebar (8) can be optimised relative to one another by adjusting the tensioning lever (2) on the driving element (14).

9. A method for adjusting a gear shifter, consisting of a shifter housing according to one of claims 3 to 5 and one of claims 6 to 8 with a clamp (6), a tensioning lever (2) with an activating surface (3) and a releasing lever (4) with a contact surface (5),
**characterised by** the following method steps:
- decision as to whether the clamp (6) on the handlebar (8) should be mounted between the gripping part (27) and a brake banding (29) or on the side of the brake banding (29) averted from the gripping part (27), taking into account the optimum position of the contact surface (3) relative to the position of the thumb of the driver during the ride;
- securing the clamp (6) onto the shifter housing (1) by means of the screw (10), which is turned into the bore (9) resulting from the decision;
- pushing the clamp (6) with the shifter housing (1) onto the handlebar (8);
- pushing the brake banding (28) onto the handlebar (8) in front of or behind the clamp (6) according to the previous decision;
- pushing on the handle element (27);
- pushing the clamping lever (2) onto the driving element (14) and loosely securing the clamping screw (15) into the clamping arms (12) and (13);
- tightening the screw (10) to fix the shifter housing (1) after a check by the rider sitting on the bicycle;
- tightening the tensioning screw (15) after checking the position of the activating surface (3) relative to the contact surface (5) by the rider sitting on the bicycle;
- test ride and possible correction of the clamping connections by loosening and retightening the screw (10) and/or the tensioning screw (15).

## Revendications

1. Commutateur destiné à actionner une boîte de vitesses sur une bicyclette, comportant un boîtier de commutateur (1), un enrouleur de câble destiné à enrouler un câble pour actionner des vitesses individuelles de la boîte de vitesses, un levier de serrage (2), un levier de libération (4), le levier de serrage (2) sur le boîtier de commutateur (1) pouvant tourner autour d'un axe de rotation (25) pour passer chaque vitesse dans la boîte de vitesses dans un sens de rotation d'enroulement de câble, tandis que dans un sens de rotation de libération de câble respectivement au moins une vitesse peut être passée par l'actionnement du levier de libération (4),
**caractérisé en ce que** les positions du levier de serrage (2) et du levier de libération (4) sont ajustables l'une par rapport à l'autre et les deux par rapport à une partie de poignée (27) sur le guidon (8) de la bicyclette et
**en ce que** le levier de serrage (2) peut être aménagé sur un élément d'entraînement (14) relié à l'enrouleur de câble à l'intérieur de son plan de rotation (20) perpendiculaire à l'axe de rotation (25) dans de nombreuses positions quelconques par rapport à l'élément d'entraînement (14).

2. Commutateur selon la revendication 1,
**caractérisé en ce que** le levier de serrage (2) est relié par entraînement par friction à une surface extérieure (19) sur l'élément d'entraînement (14).

3. Commutateur selon la revendication 1 ou 2,
**caractérisé en ce que** le levier de serrage (2) comprend un premier bras de serrage (12) et un second bras de serrage (13), qui peuvent être reliés de manière solidaire en rotation par une vis de serrage (15) à la surface extérieure (19) sur l'élément d'entraînement (14).

4. Commutateur selon la revendication 3,
**caractérisé en ce que** la vis de serrage (15) comprend une tige (16) qui est disposée entre deux flancs (18) d'un évidement (17) de l'élément d'entraînement (14).

5. Commutateur selon l'une quelconque des revendications 1 à 4,
**caractérisé en ce que** le levier de serrage (2) peut être bloqué dans chaque position à l'intérieur d'un angle d'au moins 120 degrés.

6. Commutateur destiné à actionner une boîte de vitesses sur une bicyclette, comportant un boîtier de commutateur (1), un enrouleur de câble destiné à enrouler un câble pour actionner chaque vitesse de la boîte de vitesses, un levier de serrage (2) et un levier de libération (4), le levier de serrage (2) sur le boîtier de commutateur (1) pouvant être amené en rotation dans un sens de rotation d'enroulement de câble pour passer chaque vitesse dans la boîte de vitesses, tandis que dans un sens de rotation de libération du câble, grâce à l'actionnement du levier de libération (4), respectivement au moins une vitesse peut être passée, le boîtier de commutateur (1) étant pourvu d'une bride (6) pouvant être aménagée sur un guidon (8),
**caractérisé en ce que** la bride (6) est conçue séparément du boîtier de commutateur (1) et est conçue de manière à pouvoir se déplacer par rapport au boîtier de commutateur (1) parallèlement au guidon (8) entre différentes positions d'aménagement sur le boîtier de commutateur (1), **en ce que** le boîtier de commutateur (1) comprend un socle (7) doté d'au moins deux alésages (9), les alésages (9) étant distants les uns des autres et
**en ce que** le socle (7) comprend un guidage longitudinal (26) parallèle à la partie de poignée (27) du guidon (8), guidage sur lequel la bride (6) peut être déplacée et fixée à un des alésages (9) au moyen d'une vis (10) sur le guidage longitudinal (26).

7. Commutateur selon l'une quelconque des revendications 1 ou 6,
**caractérisé en ce que** le plan de l'actionnement d'une surface de contact (5) du levier de libération (4) est incliné d'approximativement 60° par rapport au plan d'actionnement du levier de serrage (2) avec sa surface d'actionnement (3).

8. Commutateur selon la revendication 7,
**caractérisé en ce que** la position de la surface d'actionnement (3) peut être actionnée alternativement respectivement par le pouce de la main située sur la partie de poignée (27) du guidon (8) et la surface de contact (5) l'une par rapport à l'autre peut être optimisée en réglant le levier de serrage (2) sur l'élément d'entraînement (14).

9. Procédé de réglage d'un commutateur, constitué d'un boîtier de commutateur selon l'une des revendications 3 à 5 et selon l'une des revendications 6 à 8 comprenant une bride (6), un levier de serrage (2) doté d'une surface d'actionnement (3) et un levier de libération (4) doté d'une surface de contact (5),
**caractérisé par** les étapes de procédé suivantes consistant à :
- décider si la bride (6) doit être montée sur le guidon (8) entre la partie de poignée (27) et une garniture de frein (29) ou sur le côté de la garniture de frein (29) opposé à la partie de poignée (27) en tenant compte de la position optimale de la surface de contact (3) par rapport à la position du pouce du conducteur pendant le trajet ;
- fixer la bride (6) sur le boîtier de commutateur (1) au moyen de la vis (10), qui est vissée dans l'alésage (9) résultant de la décision ;
- pousser la bride (6) avec le boîtier de commutateur (1) sur le guidon (8) ;
- pousser la garniture de frein (28) sur le guidon (8) devant ou derrière la bride (6) respectivement en fonction de la décision précédente ;
- pousser la partie de poignée (27) ;
- pousser le levier de tension (2) sur la partie d'entraînement (14) et fixer sans serrer la vis de serrage (15) dans les bras de serrage (12) et (13) ;
- serrer la vis (10) pour fixer le boîtier de commutateur (1) après examen par le conducteur assis sur la bicyclette ;
- serrer la vis de serrage (15) après que le conducteur assis sur la bicyclette ait examiné la position de la surface d'actionnement (3) par rapport à la surface de contact (5) ;
- essayer de rouler et éventuellement corriger les accouplements de serrage en desserrant et vissant à nouveau la vis (10) et/ou la vis de serrage (15).
